# EUROPÄISCHE PATENTANMELDUNG

(11) **EP 0 671 613 A1**
(43) Veröffentlichungstag der Anmeldung: **13.09.1995**
(21) Anmeldenummer: 95102929.7
(22) Anmeldetag: 02.03.1995
(51) Int. Cl.: G01J 1/04

(54) **Optisches System**

(30) Priorität: 09.03.1994 DE 4407911
(71) Anmelder: TEMIC TELEFUNKEN microelectronic GmbH, D-74072 Heilbronn (DE)
(72) Erfinder: Bichlmaier, Günther, D-90449 Nürnberg (DE); Fach, Hans-Joachim, D-90461 Nürnberg (DE); Friedrich, Ferdinant, D-90562 Heroldsberg (DE)
(74) Vertreter: Maute, Hans-Jürgen, Dipl.-Ing.

(57) **Zusammenfassung**

Beschrieben wird ein optisches System mit einer optischen Einheit aus einer Sendeeinheit mit mindestens einem Sendeelement zur Emission von optischer Strahlung, einer Empfangseinheit zur Detektion von optischer Strahlung, einer optischen Strecke zur Übertragung der optischen Strahlung zwischen Sendeeinheit und Empfangseinheit und einem in der optischen Strecke angeordneten Optikkörper.
Der Optikkörper ist aus einem Außenkörper und einem Innenkörper zusammengesetzt, wobei der Außenkörper als halbkugelförmige, asphärische Konvexlinse, und der Innenkörper als prismatischer Hohlkörper mit vorgegebenem Prismenwinkel ausgebildet ist. Die Außenseite des optischen Körpers ist als Eintrittsfläche der von der Sendeeinheit emittierten optischen Strahlung der Sendeeinheit und die Unterseite des Optikkörpers als Austrittsfläche der von der Empfangseinheit zu detektierenden optischen Strahlung der Empfangseinheit zugewandt. Die Empfangseinheit besitzt ein einziges Empfangselement, das die vom Optikkörper gebündelte und umgelenkte optische Strahlung detektiert.

## Beschreibung

Die optische Einheit von optischen Systemen - beispielsweise (IR-)Fernbedienungssystemen - besteht aus einer Sendeeinheit mit einem oder mehreren Sendeelementen, einer Empfangseinheit mit mehreren Empfangselementen und einer optischen Strecke, über die Sendeeinheit und Empfangseinheit miteinander gekoppelt sind. Die von dem(n) Sendeelement(en) ausgesandte optische Strahlung wird nach Durchlaufen der optischen Strecke von den Empfangselementen detektiert; dieses Empfangssignal wird ggf. in einer Auswerteeinheit des optischen Systems weiterverarbeitet. Durch eine Änderung der Systemeigenschaften - beispielsweise infolge einer Variation der ausgesandten Strahlung durch Übertragung unterschiedlich codierter Signale - wird das Empfangssignal beeinflußt, was von der Auswerteeinheit ausgewertet werden kann. Um eine gleichmäßige Reichweite innerhalb des Empfangsbereichs (d. h. in jeder Raumrichtung, aus der ein Sendesignal erwartet wird) zu erreichen, muß die Empfindlichkeit der Empfangseinheit über den gesamten Empfangsbereich gleichmäßig und ausreichend sein (d. h. eine möglichst hohe und homogene Ausleuchtung der Empfangseinheit gegeben sein).
Zur Beeinflussung der optischen Eigenschaften der optischen Einheit kann in der optischen Strecke ein Optikkörper angeordnet werden. Aus der EP 441 713 ist es bekannt, diesen Optikkörper als torische, asphärische Außenumhüllungslinse auszubilden, die mehrere Empfangselemente (Fotozellen) der Empfangseinheit umgibt. Nachteilig hierbei ist jedoch, daß mehrere Empfangselemente unbedingt erforderlich sind, damit die Empfangseinheit für den gesamten Empfangsbereich der optischen Strahlung empfindlich ist und daß das Empfangssignal somit stark von der Raumrichtung des Sendesignals abhängig ist.

Es ist die Aufgabe der Erfindung, ein optisches System anzugeben, bei dem die genannten Nachteile vermieden werden und das vorteilhafte Eigenschaften aufweist - insbesondere einen einfachen Aufbau, eine gute Empfindlichkeit und eine homogene Empfindlichkeitsverteilung für die optische Strahlung.
Diese Aufgabe wird erfindungsgemäß durch die Merkmale im Kennzeichen des Patentanspruchs 1 gelöst.
Vorteilhafte Weiterbildungen der Erfindung ergeben sich aus den Unteransprüchen.

Zur Formung der räumlichen Empfangscharakteristik - guter und einfacher Empfang der optischen Strahlung, konstante Empfindlichkeit des Empfangsbereichs (d. h. in den Richtungen, aus denen die Strahlung gesendet werden kann) - ist der in der optischen Strecke zwischen der Sendeeinheit und der Empfangseinheit angeordnete Optikkörper aus einem als halbkugelförmige, asphärische Konvexlinse ausgebildeten Außenkörper und einem als prismatischer Rotations-Hohlkörper (Kegel) mit vorgegebenem Prismenwinkel ausgebildeten Innenkörper zusammengesetzt - optional kann noch ein zylinderförmiger Trägerkörper vorgesehen werden.
Der katadioptrische Optikkörper besteht aus einem transparenten Material mit einem von demjenigen der optischen Strecke differierenden Brechungsindex (beispielsweise aus Kunststoff). Die Konvexlinse als Außenkörper wirkt als optisch brechende Fläche zur Sammlung der von der Sendeeinheit emittierten optischen Strahlung. Am prismatischen Innenkörper wird die optische Strahlung bei entsprechender Wahl des Prismenwinkels an der Grenzfläche zwischen dem Innenkörper und der optischen Strecke totalreflektiert. Somit erfüllt der katadioptrische Optikkörper als integrierte Einheit aus dem konvexen Außenkörper und dem prismatischen Innenkörper zwei Aufgaben: einerseits dient er als "Sammellinse" und ermöglicht eine Verstärkung der optischen Strahlung und andererseits dient er der Umlenkung der Strahlrichtung. Durch den Optikkörper wird der Empfangsbereich eines einzigen Empfangselements der Empfangseinheit auf einer Kreiskegeloberfläche auf 360° aufgeweitet und gleichzeitig senkrecht zu dieser Fläche das Empfangssignal in einem gewünschten Winkelbereich gebündelt. Der Trägerkörper dient zur Verbesserung der Stabilität und zur besseren Handhabung des Optikkörpers (beispielsweise bei der Montage).
Die optische Einheit des optischen Systems vereinigt mehrere Vorteile in sich:
- sie besitzt einen einfachen und damit kostengünstigen Aufbau; insbesondere kann mit nur einem einzigen Empfangselement der gesamte Empfangsbereich (der gesamte Raumwinkelbereich aus dem optische Strahlung erwartet wird) abgedeckt werden,
- ihre Empfindlichkeit ist für den gesamten Empfangsbereich bei festem Prismenwinkel konstant,
- es ist eine kompakte Bauweise und damit eine sehr geringe Baugröße gegeben; der Abstand zwischen Optikkörper und Empfangseinheit kann sehr gering gehalten werden (beispielsweise kann die Empfangseinheit direkt auf die Unterseite des Optikkörpers aufgebracht werden),
- durch Variation des Abstands Empfangseinheit - Optikkörper ist eine beliebig starke Bündelung (des Öffnungswinkels) der Strahlung in der Hauptempfangsrichtung möglich,
- die Umlenkung der optischen Strahlung wird auf einfache Weise durch Totalreflexion bewerkstelligt; durch die Totalreflexion werden Strahlungsverluste weitgehend vermieden,
- durch Variation des Prismenwinkels kann die Hauptempfangsrichtung variiert werden,
- die Empfindlichkeit der Empfangseinheit und damit der optischen Einheit wird durch den als Sammellinse wirkenden Außenkörper des Optikkörpers um den Faktor Linsenhöhe zu Empfängerhalbmesser erhöht,
- es kann jede beliebige optische Strahlung verwendet werden - insbesondere sichtbares Licht oder IR-Strahlung.

Die Erfindung wird weiterhin anhand eines in der Zeichnung dargestellten Ausführungsbeispiels beschrieben - der optischen Einheit eines als Schließanlagen-Fernbedienung bei Kraftfahrzeugen eingesetzten und mit IR-Strahlung arbeitenden optischen Systems.
Hierbei zeigt die Figur 1 das optische System, die Figur 2 den Optikkörper mit Empfangseinheit, die Figur 3 eine Schnittzeichnung des Optikkörpers mit dem Strahlengang und die Figur 4 die Empfangscharakteristik der Empfangseinheit.

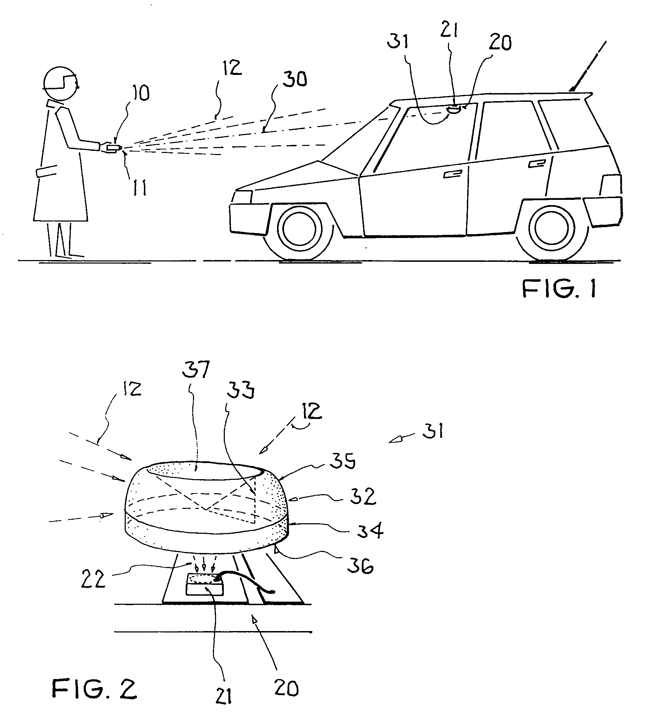

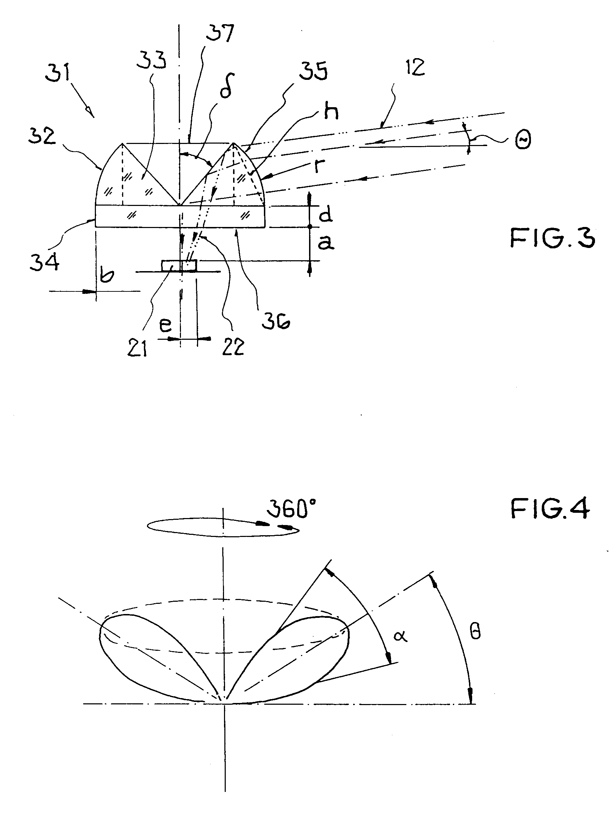

Gemäß der Figur 1 weist die optische Einheit des optischen Systems eine als Handsender ausgebildete IR-Sendeeinheit 10 mit dem Sendeelement 11 (IR-Sendediode) und eine im Fahrzeuginnern angebrachte IR-Empfangseinheit 20 mit dem Empfangselement 21 auf (IR-Empfangsdiode); als optische Strahlung 12 des Sendesignals wird IR-Strahlung, beispielsweise der Wellenlänge 950 nm, verwendet. Im Fahrzeuginnern ist in der optischen Strecke 30 - beispielsweise unmittelbar vor der Empfangseinheit 20 - ein Optikkörper 31 angeordnet. Gemäß der Figur 2 besteht der Optikkörper 31 aus dem Außenkörper 32, dem Innenkörper 33 und dem Trägerkörper 34; dieser Optikkörper 31 dient zur Verstärkung der vom Sendeelement 11 emittierten IR-Strahlung 12 und zur Umlenkung bzw. Bündelung der in die Empfangseinheit 20 eingekoppelten IR-Strahlung 22. Um Verschmutzungen zu vermeiden, kann auf dem prismatischen Hohlkörper 33 eine Abdeckung 37 vorgesehen werden. Wie aus dem Strahlengang der Figur 3 und der Empfangscharakteristik der Figur 4 ersichtlich wird, kann durch das Zusammenspiel der bündelnden Wirkung der asphärischen Sammellinse 32 - Bündelung der optischen Strahlung 12 aus der Hauptempfangsrichtung ϑ auf den Öffnungswinkel α des Empfangsbereichs - und der umlenkenden sowie aufweitenden Wirkung des Prismas 33 - Umlenkung der Strahlung 22 aus der Hauptempfangsrichtung ϑ in Richtung Empfangselement 21 mit Hilfe des Prismenwinkels δ und rotationssymmetrische Aufweitung auf 360° - die vom Sendeelement 11 der Sendeeinheit 10 ausgehende Strahlung 12 ohne Reflexionsverluste im Empfangselement 21 der Empfangseinheit 20 gebündelt werden.
Der zur Verstärkung und Umlenkung der beispielsweise unter dem Winkel ϑ von 5° einfallenden Strahlung 12 dienende Optikkörper 31 besteht beispielsweise aus Plexiglas. Sein Außenkörper 32 besitzt als Sammellinse eine annähernde halbkugelförmige Gestalt mit einem Radius r von 25 mm (real hat die Linsenoberfläche jedoch aufgrund der Korrektur von Linsenfehlern einen hiervon abweichenden "asphärisch korrigierten" Radius), eine Höhe h von 19,1 mm und eine Brennweite f von beispielsweise 30 mm, sein prismatischer Innenkörper 33 besitzt eine Höhe von r/√2 mm, also beispielsweise 17,7 mm, und einen Prismenwinkel δ von beispielsweise 47,5°. Der zylinderförmige Trägerkörper 34 besitzt eine Dicke von beispielsweise d = 5 mm und einen Durchmesser b von 50 mm entsprechend dem Linsen-Durchmesser; die Unterseite des Trägerkörpers 34 ist in einem Abstand a von beispielsweise 25 mm von der Empfangseinheit 20 angeordnet. Das Empfangselement 21 ist beispielsweise ein in Epoxyharz gegossener Silizium-Empfänger und weist einen Empfängerhalbmesser e von 1,5 mm sowie eine effektive Detektorfläche von 7,5 mm² auf.

## Patentansprüche

1. Optisches System mit einer optischen Einheit (1) aus:
a) einer Sendeeinheit (10) mit mindestens einem Sendeelement (11) zur Emission von optischer Strahlung (12),
b) einer Empfangseinheit (20) zur Detektion von optischer Strahlung (22),
c) einer optischen Strecke (30) zur Übertragung der optischen Strahlung (12, 22) zwischen Sendeeinheit (10) und Empfangseinheit (20),
d) einem in der optischen Strecke (30) angeordneten Optikkörper (31),
dadurch gekennzeichnet:
e) der Optikkörper (31) ist aus einem Außenkörper (32) und einem Innenkörper (33) zusammengesetzt, wobei der Außenkörper (32) als halbkugelförmige, asphärische Konvexlinse, und der Innenkörper (33) als prismatischer Hohlkörper mit vorgegebenem Prismenwinkel (δ) ausgebildet ist,
f) die Außenseite (35) des optischen Körpers (31) ist als Eintrittsfläche der von der Sendeeinheit (10) emittierten optischen Strahlung (12) der Sendeeinheit (10) und die Unterseite (36) des Optikkörpers (31) als Austrittsfläche der von der Empfangseinheit (20) zu detektierenden optischen Strahlung (22) der Empfangseinheit (20) zugewandt,
i) die Empfangseinheit (20) besitzt ein einziges Empfangselement (21), das die vom Optikkörper (31) gebündelte und umgelenkte optische Strahlung (22) detektiert.

2. Optisches System nach Anspruch 1, dadurch gekennzeichnet, daß der Außenkörper (32) des Optikkörpers (31) eine derart konvexe Form aufweist, daß die aus der Hauptempfangsrichtung (ϑ) einfallende optische Strahlung (12) mit dem Öffnungswinkel (α) des Empfangsbereichs gebündelt ist, und daß der Prismenwinkel (δ) des Innenkörpers (33) derart gewählt ist, daß die auf der Unterseite (36) des Optikkörpers (31) austretende Strahlung (22) im Empfangselement (21) der Empfangseinheit gebündelt ist.

3. Optisches System nach Anspruch 1 oder 2, dadurch gekennzeichnet, daß auf der Unterseite (36) des Optikkörpers (31) ein zylinderförmiger Trägerkörper (33) angeordnet ist.

4. Optisches System nach einem der Ansprüche 1 bis 3, dadurch gekennzeichnet, daß die Unterseite (36) des Optikkörpers (31) planar mit der Empfangseinheit (20) verbunden ist.
